Europäisches Patentamt

**European Patent Office**

Office européen des brevets

(11) Publication number: **0 020 309**
A1

(12). **EUROPEAN PATENT APPLICATION**

(21) Application number: 80830024.8

(22) Date of filing: 02.05.80

(51) Int. Cl.³: **G 05 D 11/035,** A 01 C 23/04, F 04 B 9/10

(30) Priority: 04.05.79 IT 6793679

(43) Date of publication of application: 10.12.80 Bulletin 80/25

(84) Designated Contracting States: DE FR GB

(71) Applicant: **CENTRO RICERCHE FIAT S.p.A., Strada Torino 50, I-10043 Orbassano, (Torino) (IT)**

(72) Inventor: **Maggioni, Virginio, Via Stazione 55, I-10090 Rosta (Torino) (IT)**
Inventor: **Gagliardi, Cesare, Via Guido Reni 219/1, I-10137 Torino (IT)**
Inventor: **Castagno, Flavio, Via Rissone 15, I-10090 Sangano (Torino) (IT)**

(74) Representative: **Jacobacci, Filippo et al, c/o Jacobacci-CASETTA & PERANI S.n.c. Via Alfieri, 17, I-10121 Torino (IT)**

(54) **Liquid additive metering device.**

(57) The device comprises a major-diameter first piston one face of which is acted upon by the pulsed pressure of a line feeding an irrigation plant, in order to periodically displace the piston against the action of resilient means. The other face of the said piston carries an axial cylindrical appendix capable to close a through hole in the bottom of a cup-shaped minordiameter second piston slidable against the action of spring means, in a cavity connected with the said line through a non return valve. A reservoir containing a liquid additive is connected to the part of the cavity containing the cylindrical appendix of the first piston.

EP 0 020 309 A1

"A metering device for the addition of a liquid
additive to a current of liquid, in particular for
the introduction of fertilizer solutions into pulsed
pressure irrigation plant".

The present invention relates to a metering device
for  the addition of a liquid additive to a current
of liquid, in particular for the introduction of
fertilizer solutions into pulsed pressure irrigation
plant.

Devices are already known called fertilizer spreaders
which serve to introduce fertilizer into the pipes of
irrigation plant, in particular those of the shower
type.  These devices comprise a tank the lower part
of which is connected, by means of an outlet connector,
to a point in the pipe that carries the water to the
irrigators, in order to introduce into it a solution
of fertilizer or other substance.

In the above-mentioned known devices the lower part
of the tank is also connected by means of an inlet
connector to a point in the above-mentioned pipe
located upstream of the point on the said pipe to
which the outlet connector is joined and, between
these points, as also between the latter and the tank,

2.

**0020309**

sluice valves for regulating the flow are interposed.

The tank is sealed and its upper wall, which is designed to receive the soluble fertilizer in solid form, communicates with the lower wall of the said tank through a filter which penetrates it a certain distance.

It will be apparent a device of this type is hardly adapted or indeed completely unsuitable, for application to irrigation plant which operates intermittently and, in particular, to plant in which the water is conveyed to the irrigators under pulsed pressure and the irrigation is of the drip type with somewhat small water flow.

Moreover, the device does not dispense an exact dosage of the fertilizer into the water delivered, since the way the solid fertilizer introduced into the tank dissolves depends on many factors and the dosing cannot be varied without varying the rate of flow of water delivered by the plant.

The need to use an hermetically sealed tank complicates and increases the cost of the structure and does not permit inspection of its interior while the irrigation is in progress.

The object of the present invention is to provide a metering device, especially a "fertilizer spreader", designed for irrigation units which operate intermittently and, in particular, for plant in which the

3.                                    **0020309**

pressure of the water supplied to the irrigators is pulsed.

According to the present invention, the fundamental solution permitting the attainment of this object lies in the fact that the device for feeding additives to a current of liquid and, in particular, to a current of liquid the pressure of which varies periodically between a minimum and a maximum value, includes a reciprocating motor pump of the lift and force type worked by a motor operated by the variable pressure of the liquid, and suitable for drawing the liquid additive – for example the aqueous fertilizer solution – from the tank and for discharging it into the current of liquid that flows towards the irrigators.

The particular technical problem underlying the present invention is to provide a device of the type specified above, which is suitable for connecting to the pipe carrying a current of liquid, at two closely spaced apart points on the said pipe, without it being necessary to interpose between them an adjustable throttle for determining a fall in pressure, and in which the motor pump unit will be of reduced size and such as to ensure an adequate filling of the pressure chamber of the pump during the phase in which it draws the liquid from the tank.

The invention also tackles the problem of providing a device of the type in question which permits the introduction into the current of water conveyed to the irrigators of well-defined doses - and also variable at option within certain limits of liquid additive, without having to interrupt the operation.

According to the present invention, a device is realised which comprises a cylindrical body provided with an axial through-cavity the opposite ends of which communicate with the outside, each through a tubular connector, and in which this cavity has a first, major-diameter part communicating with the first of these tubular connectors and a second, minor-diameter part communicating with the said first part and with the second of the said tubular connectors, and which also includes a first piston of major diameter mounted so as to slide fluid tightly in the said first part of the above-mentioned cavity, which divides this first part into a first chamber communicating with the first tubular connector and into a second chamber which communicates with the said second part of the internal cavity of the cylindrical body, a reaction spring which forces the said first piston in the direction of the first tubular connector, against a stop, a second piston of minor diameter mounted for fluid-tight sliding movement in this second part of the cavity of the cylindrical body, a reservoir connected to this second part of the cavity by means of a passage, a first valve adapted to intercept the said passage during the advance of the first piston against the action of the respective reaction spring, and a second valve, normally closed, which is interposed between the said second part of the internal cavity of the body and the said second tubular connector and which is adapted to open in the direction of the latter.

In a preferred embodiment of the invention, the said reservoir is connected to the said second chamber and the said second piston has an axial through-hole and is forced against an annular internal flange formed in the zone in which the second part of the above-mentioned cavity communicates with the said second chamber by a spring situated in the second part of the above-mentioned cavity; the first piston being provided with a cylindrical appendix having an external diameter greater than that of the hole in the said second piston but less than the internal diameter of the said annular flange, and the free end of which is separated by a space from the second piston; the said reservoir communicates with the said chamber which, together with the said hole, forms part of the passage which puts the reservoir in communication with the second part of the cavity in the body of the device, in which the second piston is slidably mounted.

In a constructional variant, the second piston is fixed to the first, and the two-diameter piston thus formed has an axial blind bore which starts from the front face of its minor diameter part and communicates with the periphery of this part, housed in the second chamber, by means of a preferably radial passage, and which includes a check valve which closes on the advance of the above-mentioned composite piston. In each case the end of the second part of the cavity of the body in which the second piston is mounted, opposite the second chamber, is fluid-tightly closed by the drilled bottom of a cup element inserted in the enlarged extension of the said second part of the cavity and adjacent to a diametrically opposite cup element, also fluid-tightly inserted in the said extension, sealed against leakage and formed by a bored appendix constituting the second tubular connector, a disc urged by a spring towards the apertured base of the first of the said elements being inserted in the delimited space of the said two elements, in such a way as to close the hole formed in the said base; this disc being adapted in this way to allow communication between the said apertured appendix and the hole in the said base, after it is lifted from the said base.

The device according to the invention further comprises means for regulating the length of stroke of the major-diameter piston, against the action of the respective reaction spring.

Other characteristics and advantages of the device of the invention will appear from the description which follows, referring, by way of non-restrictive example, to a practical embodiment illustrated in the accompanying drawings, in which:

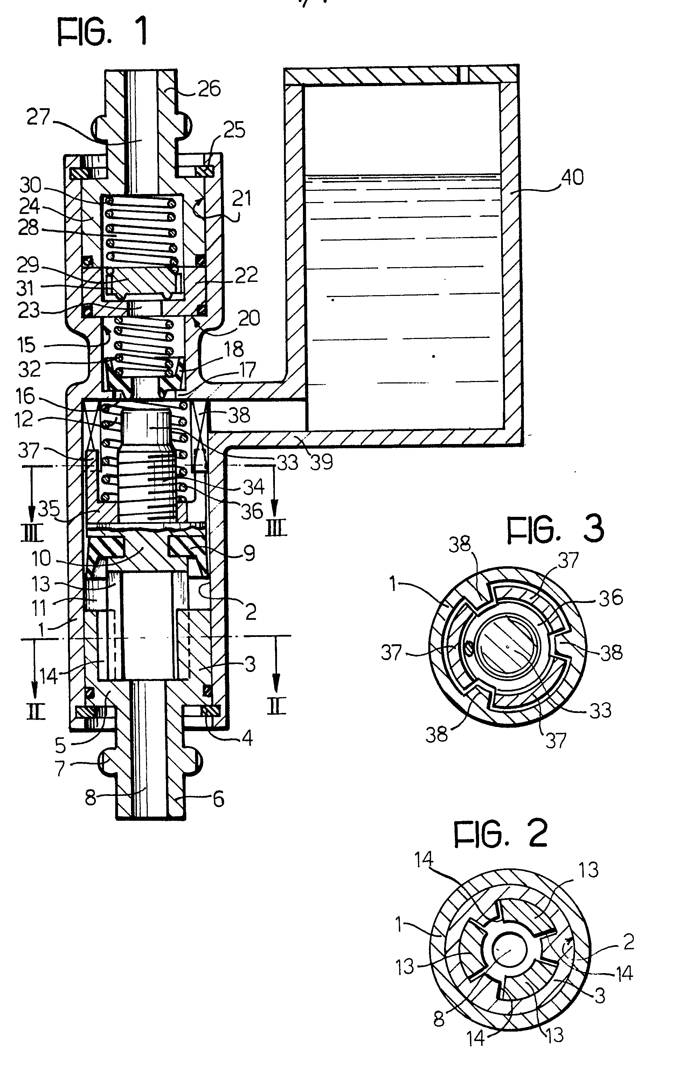

figure 1 is a sectional elevational view of the device according to the invention,

figures 2 and 3 are sections through lines II-II and III-III respectively of Figure 1.

The device illustrated in the drawings comprises a hollow body 1, of a generally cylindrical form, the axial through-cavity of which has a major-diameter first part 2 closed, in correspondence with the lower end of the body 1 in the drawing, by a cup element 3. The latter is fluid-tightly inserted in part 2 of the cavity of the body 1 and is prevented from escaping from the said body by a spring retaining ring 4. The bottom 5 of the cup element 3 carries a cylindrical appendix 6 which projects from the body 1 and is formed with an annular handgrip 7 which makes it possible to rotate it together with the cup element 3. The part 6 and the base 5 of the cup element 3 are traversed by a through-hole 8 which enables the appendix 6 to act as a tubular connector capable of joining the said cavity of the body 1 to an external pipe.

The first, major-diameter piston 10 is mounted in the inside of part 2 of the cavity of the body 1 for fluid-tight sliding movement by means of a cup-type washer 9. This first piston subdivides part 2 of major diameter of the cavity of the body 1 into two chambers, 11 and 12 respectively, which will be referred to in what follows as the first and second chamber respectively. There projects from the face of the first piston 10 turned towards the cup element 3, a tubular appendix provided with axial slots 13 which extend as far as the base 5 of the cup element 3. The length of this appendix is greater than that of the cup element 3, and into its axial slots 13 there penetrate axial ribs 14 formed by internal wall of the above-mentioned element 3.

The second chamber 12, forming part of the major-diameter part 2 of the internal cavity of the body 1, communicates with the part 15 of minor diameter of the internal cavity of the body 1. Mounted in fluid-tight, sliding fashion on the inside of the second part 15 of the above-mentioned cavity there is a second piston 18 made of elastic material and having a cup shape, the cavity of which is turned in the direction opposite to the first piston 10 and in the base of which there is machined a through-hole 19. The second, minor-diameter part 15 of the cavity of the body 1 connects, by means of a radial step 20 with an enlarged terminal section 21 of the same cavity, the diameter of which is substantially equal to that of the part 2 of this cavity. There is inserted fluid-tightly in the section 21, a cup element 22 which has its cavity facing in the direction opposite to the above-mentioned minor-diameter section 15. This element 22 bears against the radial step 20 and is provided with a through-hole 23 machined in the respective base on the upper edge of the element 22 there is superimposed the lower edge of a cup element 24 the cavity of which is turned towards the element 22 and which is maintained inside the section 21 in which it is fluid-tightly inserted of the body 1, by a spring retaining ring 25. From the base of the element 24 there projects a cylindrical extension 26 which extends beyond the corresponding end of the body 1 and is traversed by hole 27 which puts the internal cavity of the cup element 24 in communication with the exterior. This extension or appendix 26 forms the second tubular connector adapted to put the internal cavity of the body 1 in communication with an external pipe. The cavities communicating between the cup elements 22 and 24 form a chamber 28 in which is housed a disc valve 29 which intercepts, under the action of the spring 30 interposed between the said disc and the bottom of the cup element 24, the hole 23 machined in the bottom of the cup element 22. The external diameter of the disc 29 is less than the diameter of the chamber 28 and the said disc is guided within the latter by means of the ribs 31 formed on its periphery.

The second piston 18 is urged constantly towards the radial annular flange 17 by the action of a spring 32 interposed between this second piston 18 and the base of the cup element 22.

From the face of the first piston 10 turned towards the chamber 12 there projects a cylindrical appendix 33 the length of which is such that its free end is closely spaced from the second piston 18. Consequently, chamber 12 communicates, through the hole 19 machined in the piston 18, with the minor-diameter second section 15 of the internal cavity of the body 1, in which there is slidably mounted the second piston 18. The appendix 33 is provided, a certain distance from its free end, with a thread 34 on which there is screwed a ring nut 35 forming the support of one end of the reaction spring 36, which constantly urges the first piston 10 against the base 5 of the cup element 3 and the upper end of which is supported by the annular flange 17.

The ring nut 35 is provided on its periphery with a tubular appendix 37 which extends parallel to the appendix 33 of the first piston 10 and is provided with axial grooves guided by axial ribs 38 projecting from the upper part of the lateral wall of chamber 12. The length of the appendices 37 is such that their ends are separated from the end of a chamber 12 opposite the piston 10 by a space substantially equal to the possible stroke of the second piston 18 of minor diameter in section 15 of the cavity of the body 1. The length, in turn, of the ribs 38 projecting from the lateral wall of the chamber 12 is such that their ends are separated from the face of the piston 10 turned towards the above-mentioned chamber 12 by a space not less than the possible stroke of the piston 18.

The chamber 12 communicates, in addition, by means of a tubular connector 39 with the inside of a reservoir 40 formed similarly to the connector 39, in one piece with the body 1.

The operation of the device is as follows:

when the said device is used to introduce a fertilizer solution, or a solution of some other kind, into the duct supplying the irrigators of an irrigation plant (not illustrated) under a pulsed supply pressure, the first tubular connector, 6, 8 is joined to the delivery

11.                                    0020309

pipe of the plant, and the second tubular connector 26, 27 to a point on this delivery pipe, situated downstream of the point where the first connector 6, 8 is joined. The reservoir 40 is filled with an aqueous solution of fertilizer or of some other substance; this solution fills the chamber 12 and the second part 15 of the internal cavity of the body 1 in which the second piston 18 is mounted slidably. At each pressure pulse transmitted to the device through the first tubular connector 6, 8, the first piston with major diameter 10 will advance against the action of the reaction spring 36, in the direction of the second piston 18. After a short stroke, the appendix 33 of the first piston 10 will intercept the hole 19 in the second, minor-diameter piston 18 and will force the latter against the action of the spring 32, towards the base of the cup element 22. The increase in pressure in the second minor-diameter section 15 of the internal cavity of the body will have the effect of lifting the valve 29 from the bottom of the cup element 22 and of allowing the solution to pass, through the chamber 28 and the hole 27, to the delivery pipe of the irrigation plant at a pressure greater than that which has determined the movement of the pistons 10 and 18.

On the subsequent fall in pressure in the delivery pipe of the irrigation plant, the piston 10 will return to its initial position under the action of the spring 36, causing the simultaneous return of the piston 18 and the interception of the hole 23 by the disc 29. After the second piston has come to rest against the annular flange 17, the appendix 33 detaches itself from the hole 19 of the second piston and makes possible the inflow of the solution coming from the reservoir 40 to the upper part of the second piston 18, and the cycle can recommence with a second increase in pressure in the chamber 11, transmitted from the delivery pipe of the irrigation plant.

To regulate the stroke of the pistons 10 and 18 it is sufficient to effect rotation of the first tubular connector 6, 8, by acting on the annular handgrip 7, in such a direction as to cause a change in position of the ring nut 35 with respect to the appendix 33 of the piston 10 in the direction of the annular flange 17.

Naturally, without prejudice to the principle of the invention, its details can be varied widely with respect to what is herein described and illustrated merely by way of example, without thereby departing from the scope of the invention defined in the appended Claims.

Thus, for example, the first and second pistons could be in one single piece. In this case, the second piston would be constituted by the extension of appendix 33 of the first piston 10, extending directly inside the second part 15 of the internal cavity of the body 1. Naturally, the internal flange 17 would then be eliminated, while the communication between the second part 15 of minor diameter of the internal cavity of the body 1 and the chamber 12 could be ensured by an axial passage formed in the minor
diameter part of the piston starting from its front
surface and communicating with chamber 12 through a
radial section.  In a passage of this sort a check
valve could be incorporated which closes upon the
advance of the composite double-diameter piston thus
formed, and which opens during the reverse movement
of this piston under the action of the reaction
spring 37.  The ring nut 35 could be screwed on the
thread formed on the minor-diameter part of the piston
separated from its section sliding in the minor-
diameter part 15 of the internal cavity of the body 1.

Claims:

1.   A metering device for adding a liquid additive to a current of liquid, and in particular for the introduction of fertilizer solutions into irrigation plant working under pulsed pressure, characterized by the fact that it comprises a cylindrical body (1) provided with an axial through-cavity the opposite ends of which communicate with the exterior, in each case by means of a tubular connector (6, 26); this cavity has a major-diameter first part (2) communicating with the first (6) of the said tubular connectors and a minor-diameter second part (15) communicating with the said first part and with the second of the said tubular connectors (26); a first piston (10) of major diameter mounted for fluid-tight sliding movement in the said first part (2) of the above-mentioned cavity, which divides this first part into a first chamber (11) communicating with the first tubular connector (6) and a second chamber (12) which communicates with the said second part (15) of the internal cavity of the above-mentioned body; a reaction spring (36) which urges the said first piston (10) in the direction of the first tubular connector (6), against a stop (5), a second minor-diameter piston (18) mounted slidably in the said second part (15) of the internal cavity of the body, a reservoir (40) joined with the said second part of the cavity by means of a passage (39, 12, 19), a first valve (33) adapted to intercept the said passage during the advance of the first piston (10) against the action of the respective reaction spring (36), and a second valve (29), normally closed, which is interposed between the said second part (15) of the cavity and the said tubular connector (26) and adapted to open in the direction of the latter.

2.	Device as claimed in Claim 1, characterized by the fact that the said reservoir (40) is connected to the said second chamber (12), and that the said second piston (18) has an axial through-hole (19) and is urged against an internal annular flange (17) formed in the zone in which the second part (15) of the cavity communicates with the said second chamber (12), by a spring (32) situated in the said second part (15) of the above-mentioned cavity; the first piston (10) being provided with a cylindrical appendix (33) having its external diameter greater than that of the hole (19) in the said second piston (18) but less than the internal diameter of the said annular flange (17), and the free end of which is spaced from this second piston (18); the said reservoir (40) communicating with the said second chamber (12) which, together with the said hole (19), forms part of the passage which puts the reservoir (40) in communication with the said second part (15) of the internal cavity of the cylindrical body (1) of the device.

3.	Device as claimed in Claim 1 characterized by the fact that the second piston (18) is fixed to the first piston (10) and the composite piston thus formed has an axial blind bore that starts in the front face of its minor-diameter part and communicates with the periphery of this part housed in the second chamber (12) by means of a radial passage, and which includes a check valve which closes upon the advance of the above-mentioned composite piston.

4.  Device as claimed in Claim 1, characterized by the fact that that end of the second part (15) of the cavity wherein the second piston (18) is slidably mounted which is remote from the second chamber (12), is closed fluid-tightly by the bored base of a cup element (22) inserted in the widened extension (21) of the said second part (15) of the above-mentioned cavity and next to a diametrically opposed cup element (24), also inserted fluid-tightly in the said extension (21), blocked against the escape of the latter to the outside and formed with a bored appendix (26) constituting the said tubular connector, there being inserted into the space delimited by the said two elements (22,24) a disc (29) urged by a spring (30) towards the drilled base of the first (22) of the said elements in such a way as to close the hole (23) machined in the said base; the said disc (25) being shaped so as to permit communication between the said drilled appendix (26) and the hole (23) in the said base after it has been lifted from the said base.

5.  Device as claimed in Claim 1, characterized by the fact that it includes means for regulating the length of stroke of the major-diameter piston (10) against the action of the respective reaction spring (36).

6.  Device as claimed in Claim 5, characterized by the fact that the said means include a member (3, 6, 7) adapted for rotating the first piston (10), by external manipulation, mounted so as to rotate in the said first chamber, and spacer members (37) arranged

4.                                              0020309

in the second chamber (12), the length of which is less than that of the second chamber, which are joined by means of a screw thread to the part (33) of the first piston (10) projecting into this second chamber (12) and prevented from rotating relative to the walls of the latter.

7.    Device as claimed in Claim 6, characterized by the fact that the said members for causing the first piston (10) to rotate comprise a cup element (3) inserted in the first chamber (11) in such a way as to close it fluid-tightly by the part remote from the first piston, the base of which, held against escaping from the first chamber by a retaining ring (4), has an appendix (6) projecting from the body (1) and bored axially, which constitutes the said first tubular connector;  this cup element (3) which has its cavity turned towards  the first piston (10), presenting in the cylindrical lateral wall of the said cavity axial ribs (14) which form guides for the axial grooves (13) formed in a tubular appendix of the first piston (10) turned towards the said cup element (3).

8.    Device as claimed in Claim 6, characterized by the fact that the said spacer members housed in the second chamber (11) comprise a tubular appendix (37) parallel to the axis of the first piston formed on the periphery of a ring nut (35) forming the support for the reaction spring (36) acting on the first piston (10), screwed on the threaded part of the latter, which projects into the second chamber (12);  the said appendix (37), the width of which is less than that of the second chamber, being guided by ribs (38) formed in the section of the internal wall of the second chamber (12), which starts from a zone the distance of which from the first piston (10) is greater than the length of the possible stroke of the second piston (18) in the second section (15) of the external cavity of the body (1).

0020309

1/1

FIG. 1

FIG. 3

FIG. 2

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | |
| X | US - A - 3 818 924 (CARLYLE) <br><br> * Column 2, lines 59-68; columns 3-10; column 11, lines 1-31; figures 1-19 * <br> -- | 1,2,3, 4,5 | G 05 D 11/035 <br> A 01 C 23/04 <br> F 04 B 9/10 |
| X | FR - A - 2 329 980 (ECONOMICS LA-BORATORY) <br><br> * Page 2, lines 14-39; pages 3-6; figures 1-4 * <br> -- | 1,2,3, 4,5 | |
| | GB - A - 996 325 (TACCHI) <br><br> * Page 2, lines 14-130; page 3; page 4, lines 1-19; figures 1-3 * <br> -- | 1,2,3, 4 | **TECHNICAL FIELDS SEARCHED (Int.Cl. 3)** <br><br> A 01 C <br> A 01 M <br> A 01 K <br> G 05 D <br> F 04 B |
| | US - A - 3 228 560 (TACCHI) <br><br> * Column 1, lines 64-72; column 2; column 3, lines 1-33; figure 1 * <br> -- | 1,2,3 | |
| | US - A - 2 789 510 (MEYNIG) <br><br> * Column 1, lines 47-72; column 2; column 3, lines 1-63; figures 1,2 * <br> -- | 1,2,3 | |
| | FR - A - 1 228 608 (MEDO-APPARATE-GESELLSCHAFT) <br><br> * Page 3, right-hand column, para-graphes 6-8; pages 4 and 5; page 6, left-hand column; figures 1-3 * <br> -- | 1,2 | **CATEGORY OF CITED DOCUMENTS** <br><br> X: particularly relevant <br> A: technological background <br> O: non-written disclosure <br> P: intermediate document <br> T: theory or principle underlying the invention <br> E: conflicting application <br> D: document cited in the application <br> L: citation for other reasons |
| | FR - A - 1 284 781 (CORDIS) <br><br> * Page 2; page 3, left-hand column; figures 1-4 * <br> -- | 1,2 | |
| | The present search report has been drawn up for all claims | ./.. | &: member of the same patent family, corresponding document |

| Place of search | Date of completion of the search | Examiner |
|---|---|---|
| The Hague | 12.08.1980 | VERMANDER |

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | |
| | US - A - 3 131 707 (CORDIS) | 1,2 | |
| | * Columns 2 and 3; figures 1-4 * | | |

TECHNICAL FIELDS
SEARCHED (Int. Cl. 3)